Europäisches Patentamt

(19) European Patent Office

Office européen des brevets

(11) Veröffentlichungsnummer: **0 137 488**

**A2**

(12) **EUROPÄISCHE PATENTANMELDUNG**

(21) Anmeldenummer: **84112125.4**

(22) Anmeldetag: **10.10.84**

(51) Int. Cl.⁴: **C 03 C 27/04**

(30) Priorität: **12.10.83 DE 3337037**

(43) Veröffentlichungstag der Anmeldung:
**17.04.85 Patentblatt 85/16**

(84) Benannte Vertragsstaaten:
**AT CH FR GB IT LI NL**

(71) Anmelder: **Schott Glaswerke**
**Hattenbergstrasse 10**
**D-6500 Mainz(DE)**

(84) Benannte Vertragsstaaten:
**AT CH FR GB IT LI NL**

(71) Anmelder: **Carl-Zeiss-Stiftung trading as SCHOTT**
**GLASWERKE**
**Hattenbergstrasse 10**
**D-6500 Mainz 1(DE)**

(84) Benannte Vertragsstaaten:
**GB**

(72) Erfinder: **Ertel, Gerhard**
**Heinzelwinkelstrasse 17**
**D-8311 Tiefenbach(DE)**

(74) Vertreter: **Rasper, Joachim, Dr.**
**Bierstadter Höhe 22**
**D-6200 Wiesbaden(DE)**

(54) Platine zur Herstellung von Durchführungen mit Glas/Metallverschmelzungen.

(57) Rei einer aus einer Metallplatte 1 bestehenden Platine zur Herstellung von Durchführungen mit Glas/Metallverschmelzungen, sind die Bohrungen, die den metallischen Leiter und den Glasisolierkörper 6 aufnehmen, an ihrer Innenwand mit Widerlagern versehen, die am unteren Rand der Bohrung angeordnet sind und aus angeformten Nocken 7 bestehen oder ringförmig ausgeführt sein können, wodurch das Durchsacken des normalerweise zylindrischen Glasisolierkörpers 6 beim Einschmelzen des Leiters in die Bohrung verhindert wird.

FIG.3a

Fig.3

FIG.3b

Platine zur Herstellung von Durchführungen mit Glas/ 0137488
Metallverschmelzungen

**Beschreibung:**

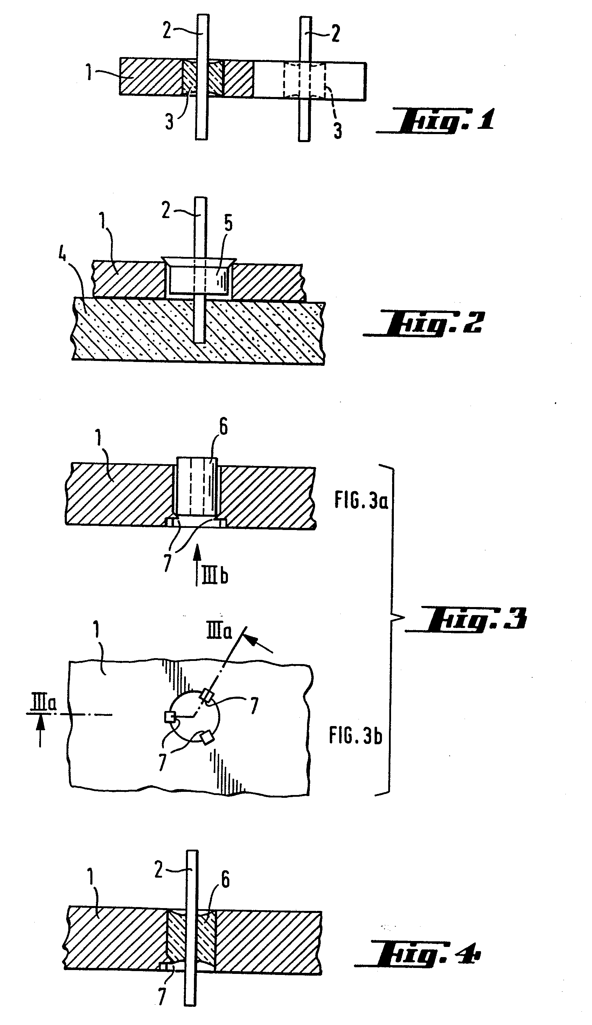

Durchführungen auf der Grundlage von Glas/ Metallverschmelzungen zum Zwecke der hermetischen Kapselung von
aktiven und passiven Bauelementen der Elektrotechnik
und Elektronik finden ein breites Anwendungsgebiet. Sie
bestehen in der Regel aus einem Trägerkörper aus Metall
(Platine) mit einer oder mehreren Bohrungen zur Aufnahme
der aus Glas bestehenden Isolierkörper, und aus den Durchführungsleitern, die aus einer dem Glas mehr oder weniger
angepaßten Metall-Legierung hergestellt sind. In Fig. 1
ist eine herkömmliche Durchführung schematisch im Schnitt
dargestellt, wobei mit 1 die Platine, mit 2 der Leiter
und mit 3 der Isolierkörper bezeichnet sind.

Zum Einschmelzen des Leiters in die Bohrung der Platine
werden alle Teile auf Graphitplatten fixiert und sodann
in einem geeigneten Ofen unter Schutzgas einer Wärmebehandlung unterzogen. Dabei wird das Glas erweicht, füllt
die Bohrungen voll aus und verbindet sich mit den Metallen
zu einem hermetisch dichten Isolierkörper.

Es ist im allgemeinen unvermeidlich, daß die verwendete
Glasperle aufgrund der Schwerkraft auch Kontakt mit der
Auflageplatte aus Graphit bekommt und so beim Schmelzvorgang sich Kohlepartikel in die Glasoberfläche einbauen
oder an diese anlagern. Derartige Graphitteilchen können
in bestimmten Fällen, z.B. beim Vernickeln der Durchführungen, sehr störend sein, da sich an ihnen Metallpartikel
anlagern, welche die elektrischen Werte der Durchführung
verschlechtern können.

Zwar ist bereits versucht worden, dieses Durchsacken der
normalerweise zylindrischen Sinterglasperle dadurch zu vermeiden, daß man diese mit einem Bund versieht, der den
Zweck hat, die Perle beim Schmelzvorgang bis zum Anbinden an die Metallwandung in ihrer Lage zu fixieren, wie dies
in Fig. 2 dargestellt ist, wobei mit 4 die Graphit-Platte
und mit 5 die einen Bund aufweisende Glasperle bezeichnet
ist. Auf diese Weise kann der Kontakt mit der Graphitplatte weitgehend vermieden werden.

Dieses Fertigungsverfahren hat aber ebenfalls zwei gravierende Nachteile:

    1. eine Bundperle ist schwieriger herzustellen
       als eine zylindrische Glasperle und

    2. sie bedarf bei der Montage eines speziellen
       Richtvorganges, was insbesondere bei automatisierten Montageaggregaten sich erschwerend
       bemerkbar macht.

Ziel der vorliegenden Erfindung ist eine Platine zur Herstellung von Durchführungen, welche die geschilderten
Nachteile nicht aufweist. Dieses Ziel wird mit einer Platine gemäß den Patentansprüchen erreicht.

Die Erfindung vermeidet also die geschilderten Nachteile
durch Anformen von einem Widerlager in die Bohrungen der
Platine. Dieses Widerlager verhindert, daß der zylindrische Glaspreßling bei der Montage auf die Graphitplatte
durchfällt und so mit ihr Kontakt erhält. Vielmehr bleibt
der Glaspreßling immer, auch während des Schmelzvorganges,
in einem gewissen Abstand zu der Graphitplatte, so daß
das Glas einwandfrei an dem metallischen Leiter anschmelzen kann.

Das Anformen des Widerlagers kann auf beliebig geeignete Weise erfolgen. Zweckmäßigerweise wird das Widerlager
bei der Herstellung des Stanzteiles mit angeformt.

0137488

Dieses Widerlager kann ringförmig ausgebildet sein oder aus Arretierungsnocken bestehen, wobei die Zahl der Nocken nicht kritisch ist, da eine einzige Nocke bereits den gewünschten Zweck erfüllen kann (Fig. 4). Am günstigsten haben sich drei am unteren Rande der Bohrung angeordnete Nocken erwiesen.

In der Zeichnung (Fig. 3) ist eine beispielhafte Ausführungsform der Erfindung dargestellt. Fig. 3a zeigt eine Platine 1 im Schnitt mit der in die Bohrung eingesetzten, zylindrischen Glasperle 6. Die Glasperle 6 ruht auf Arretierungsnocken 7. Fig. 3b zeigt einen Ausschnitt der gleichen Platine in Draufsicht, von unten jedoch ohne die eingesetzte Glasperle 6.

0137488

- 4 -

0137488

Patentansprüche:

1. Platine zur Herstellung von Durchführungen mit Glas/
Metallverschmelzungen, bestehend aus einer Metallplatte
(Platine), mit Bohrungen zur Aufnahme der metallischen
Leiter und des Glas-Isolierkörpers, der in diese Bohrungen eingeschmolzen wird, dadurch gekennzeichnet, daß
diese Platine (1) an der Innenwand dieser Bohrungen ein
Widerlager aufweist, welches geeignet ist, die zur Bildung des Glas-Isolierkörpers in diese Bohrungen eingesetzten Glasperlen (6) während des Einschmelzvorganges
in ihrer Lage zu fixieren und ein Durchsacken der Glasschmelze zu verhindern.

2. Platine nach Anspruch 1, dadurch gekennzeichnet, daß
dieses Widerlager am unteren Rande dieser Bohrungen angeordnet ist.

3. Platine nach Anspruch 1 oder 2, dadurch gekennzeichnet, daß dieses Widerlager aus Arretierungsnocken (7)
besteht.

4. Platine nach Anspruch 1 oder 2, dadurch gekennzeichnet, daß diese Arretierungsnocken (7) bei der Herstellung
der Platine (1) angeformt worden sind.

5. Platine nach Anspruch 3, dadurch gekennzeichnet, daß
sie drei Arretierungsnocken (7) aufweist.

6. Platine nach Anspruch 1 oder 2, dadurch gekennzeichnet, daß dieses Widerlager ringförmig ausgebildet ist.

0137488

*Fig. 1*

*Fig. 2*

FIG.3a

FIG.3b

*Fig. 3*

*Fig. 4*